# EUROPEAN PATENT SPECIFICATION

(11) **EP 0 410 494 B1**
(45) Date of publication and mention of the grant of the patent: **29.12.1993**
(21) Application number: 90119107.2
(22) Date of filing: 24.06.1986
(51) Int. Cl.: B29C 55/20, B29C 55/08

(54) **Horizontal drawing machine**
Horizontale Streckmaschine
Machine d'étirage horizontale

(30) Priority: 25.06.1985 JP 138121/85; 19.08.1985 JP 181280/85; 19.08.1985 JP 181281/85; 23.08.1985 JP 184016/85; 08.05.1986 JP 105534/86
(43) Date of publication of application: 30.01.1991
(62) Divisional of application: 86108598.3
(73) Proprietor: MITSUBISHI JUKOGYO KABUSHIKI KAISHA, Tokyo (JP)
(72) Inventor: Suzuki, Tsutomu, c/o Nagoya Mach. Works Mitsubishi, Nakamura-ku, Nagoya-shi, Aichi-ken (JP); Seko, Tatsushi, c/o Nagoya Mach. Works Mitsubishi, Nakamura-ku, Nagoya-shi, Aichi-ken (JP); Tobita,Kuniharu, c/o Nagoya Mach.Works Mitsubishi, Nakamura-ku, Nagoya-shi, Aichi-ken (JP); Matsubayashi, Saburo, c/o Nagoya Mach. Works, Mits, Nakamura-ku, Nagoya-shi, Aichi-ken (JP); Kougo, Nobuhiko, c/o Nagoya Mach. Works Mitsubishi, Nakamura-ku, Nagoya-shi, Aichi-ken (JP); Ogawa, Kiyoshi, c/o Nagoya Mach. Works Mitsubishi, Nakamura-ku, Nagoya-shi, Aichi-ken (JP); Taniguchi, Susumu, c/o Nagasaki Techn. Inst. of, Nagasaki-shi, Nakasaki-ken (JP); Minami. Masaharu, c/o Takasago Techn. Inst. of, Arai-cho, Takasago-shi, Hyogo-ken (JP); Hayakawa, Masayuki, c/o Nagoya Techn. Inst. of, cho, Nakamura-ku, Nagoya-shi, Aichi-ken (JP); Kawada, Noriyuki, c/o Hiroshima Techn. Inst. of, chome, Nishi-ku,Hiroshima-shi,Hiros.-ken (JP)
(74) Representative: Henkel, Feiler, Hänzel & Partner

(56) References cited:
- DE-B- 1 114 460
- GB-A- 957 550
- GB-A- 991 245
- PATENT ABSTRACTS OF JAPAN, vol. 8, no. 191 (M-322)[1628], 4th September 1984;& JP-A-59 083 624 (MITSUBISHI JUKOGYO) 15-05-1984

## Description

The present invention relates to a horizontal drawing machine of the kind defined by the precharacterizing features of the claim.

In conventional horizontal drawing machines of this kind, pinching and releasing of the strip material is effected by mechanical mechanisms, as for instance clips, the operation of which causes noise by mutual contact.

Further, abrasion powder resulting from said contact is yielded so that clean conditions cannot be maintained and films of high quality, therefore, cannot be provided. Therefore the conventional horizontal drawing machines are not suited for producing films for which a very high degree of cleanness is demanded, as for example base films of magnetic tapes, insulating material of condensors, and base films for photographic film materials.

From GB-A-957 550 there is known a tenter clip of a horizontal type comprising the features of the preamble of the claim, in particular a horizontally disposed base, a pair of arms and a bracket connecting the pair of arms. A jaw or clip lever is mounted to the arms and is vertically pivotable under the action of gravity. On the top side of the movable jaw there is mounted a permanent magnet which is attracted towards a second permanent magnet provided at the bracket to assist the forces of gravity in rapidly moving the jaw in the vertical direction.

It is therefore the object of the present invention to provide a horizontal drawing machine of the kind defined at the preamble which is suited for producing films under high cleanness conditions, and which, further is highly wear resistent.

This object is attained by the characterizing features of the claim.

The advantages obtained by the invention will be described along a preferred embodiment of the invention taken in conjunction with the accompanying drawing, wherein:
Figs. 1 through 4 shows an embodiment according to the present invention, in which Fig. 1 is a fragmentary vertical sectional view showing the film-pinching operation in the inlet section of a horizontal drawing machine, Fig. 2 is a view in the direction of the arrow I in Fig. 1, Fig. 3 is a fragmentary vertical sectional view showing the film-releasing operation in the outlet section of the horizontal drawing machine, and Fig. 4 is a view in the direction of the arrow II in Fig. 3;
Fig. 5 is a fragmentary front view showing the film-pinching operation in the inlet section of the conventional horizontal drawing machine;
Fig. 6 is a view in the direction of the arrow III in Fig. 5;
Fig. 7 is a fragmentary vertical sectional view showing the film-releasing operation in the outlet section of the conventional horizontal drawing machine;
Fig. 8 is a view in the direction of the arrow IV in Fig. 7.

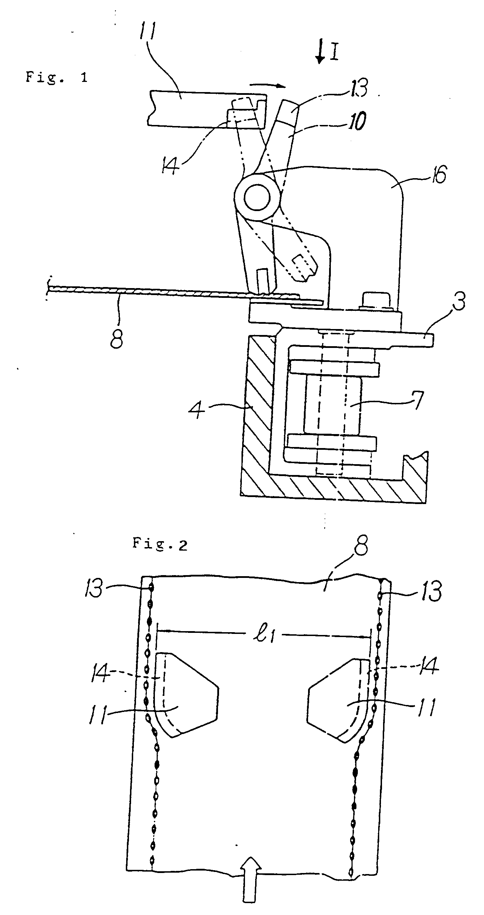

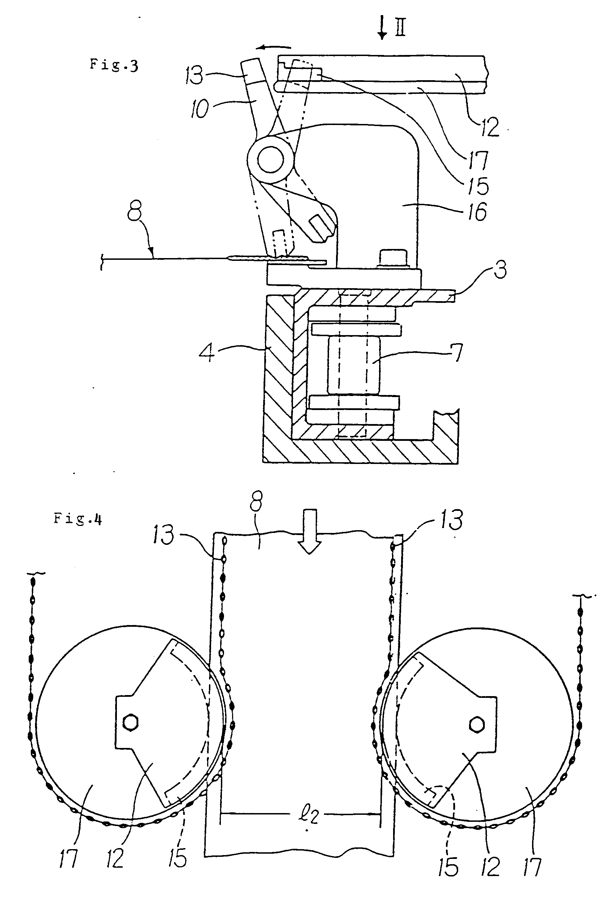

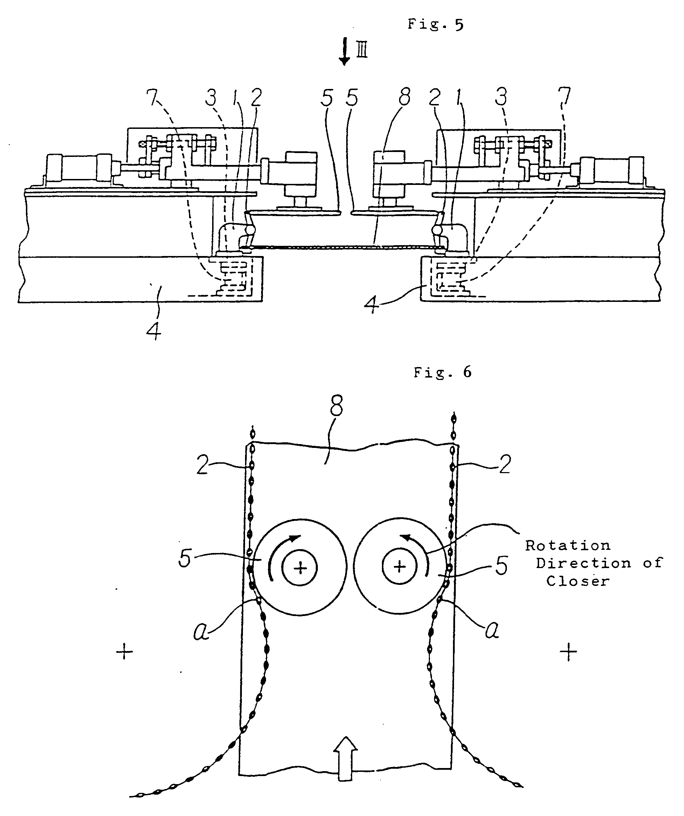

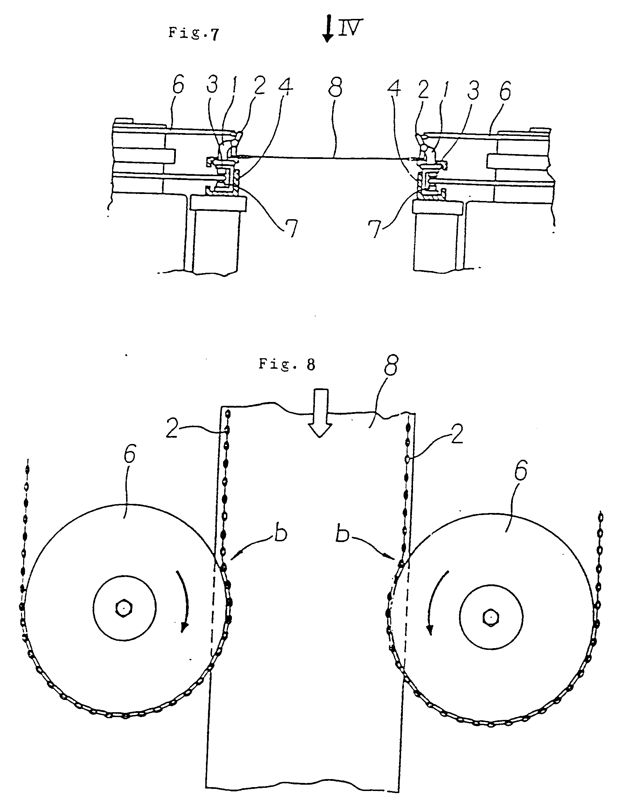

Figs. 1 through 4 show the working state, at the time of pinching and releasing, of a clip mechanism and a clip lever of a horizontal drawing machine according to the present invention. For brevity, this embodiment will be described mainly with respect to its different points from the conventional machine shown in Figs. 5 through 8.

10 is a clip lever having a permanent magnet 13 secured to its top, whose shape and other properties are identical to those of the conventional member. 11 is a clip closer, which is disposed in the inlet section of the horizontal drawing machine and made of a plate having a substantially sector-shaped portion and a straight portion continuing from the former, having a permanent magnet 14 secured on its edge opposite on the side of a film 8 to the permanent magnets 13 on the tops of the clip levers 10. There is included a pair of such clip closers 11 whose back portions confront each other in the cross direction of a film 8, with the spacing ℓ₁ between the straight portions being made adjustable externally.

12 is a clip opener, which is disposed in the outlet section of the horizontal drawing machine and made of a sector-shaped plate, having a permanent magnet 15 secured on its arcuate portion opposite on the outside of the film 8 to the permanent magnets 13 on the tops of the clip levers 10, with this sector-shaped plate being mounted on a rotary disc 17 corresponding to the conventional clip opener. This disc 17 is designed so that the spacing ℓ₂ between the arcuate faces of the clip openers 12 is made adjustable externally.

Of course, the permanent magnets 13 secured to the clip levers 10 and the permanent magnets 14 and 15 secured to the clip closers 11 and the clip openers 12 are selected so as to repel mutually.

The action of the foregoing configuration will now be described. The clip lever 10 of a clip body 16 circulating in the same manner as that of the conventional machine is turned in the inlet section of the horizontal drawing machine by means of the repulsive force between the permanent magnet 14 secured to the clip closer 11 and the permanent magnet 13 of the clip lever 10 to thereby maintain the film 8 in the pinched state by means of a mechanism not shown, such as a spring, accommodated in the clip body 16. As the clip body 16 pinching the film 8 advances toward the outlet of the horizontal drawing machine, the permanent magnet 13 of the clip lever 10 comes into opposite to the permanent magnet 15 of the clip opener 12, the clip lever 10 is turned in the opposite direction to that effected in the inlet section by means of the repulsive force of the mating magnet, and the film 8 is maintained in the released state by means of the mechanism not shown accommodated in the clip body 16. As the result of the foregoing operation the film 8 is stretched laterally, likely to the conventional machine, thereby becoming a desired product.

Incidentally, when the turning resistance of the clip lever 10 becomes excessive due to some causes and stronger than the repulsive force of the foregoing magnets, the disc 17 comes into contact with the clip lever 10 to turn forcibly the same, likely to the conventional clip opener. Thus, even if there arise some unexpected causes, contact can be prevented from occurring between the permanent magnets 13 and 15 secured to the clip lever 10 and the clip opener 12, respectively. Although in the embodiment illustrated the respective magnets secured to the clip closer 11 and the clip opener 12 are shown as being the permanent magnets 14 and 15, these can be replaced individually by electromagnets.

In connection with the foregoing magnets, the following matters should be taken into consideration:
(1) Magnetic leakage be prevented.
(2) Magnetic field strength be strengthened to increase repulsive forces.
(3) Secular change of magnetization be prevented not to weaken repulsive forces even after a long-term use.

Incidentally, in case the magnetic repulsive force is sufficiently large, it will be understood that the disc 17 may be omitted from the machine. Further, depending upon the design conditions, for example, in the case of the working speed being high, a member equivalent to the disc 17 can be added to the clip closer 11.

According to the present invention described in detail hereinabove, since oscillation of the clip lever is effected by means of the repulsive force of the magnet, wear of the clip lever, clip closer, and clip opener can be eliminated completely, and noise ceases because no mutual contact exists. Further, abrasion powder resulting from contact is not yielded, so that a clean condition can be maintained and a film of high quality can be produced.

## Claims

1. A horizontal drawing machine for pinching the selvage edges of a film-like strip material (8) and continuously stretching laterally the strip material (8) in the cross direction, comprising
clip bodies (16) for pinching and releasing the strip material and self-holding their resultant state, and
clip levers (10) mounted swingably on said clip bodies (16) each having a permanent magnet (13) secured to its top,
characterized by
clip closers (11) disposed at the inlet section and clip openers (12) disposed at the outlet section of the drawing machine, each having a magnetic pole (14,15) repulsive with said permanent magnet (13),
wherein oscillation of said clip levers (10) is driven by the repulsive force of magnetism to thereby pinch and release the strip material (8).

## Patentansprüche

1. Horizontalstreckmaschine zum Verklemmen oder Verspannen der Randkanten eines film- oder folienartigen Bandmaterials (8) und zum fortlaufenden lateralen oder seitlichen Strecken bzw. Recken des Bandmaterials (8) in der Querrichtung, umfassend:
Klemm(stück)körper (16) zum Verklemmen und Freigeben des Bandmaterials und zum Selbsterhalten ihres resultierenden Zustands und
an den Klemm(stück)körpern (16) schwingend oder schwenkbar montierte Klemmhebel (10) mit jeweils einem an ihrem Vorderende befestigten Dauermagneten (13),
gekennzeichnet durch
an der Einlaßsektion angeordnete Klemmstückschließer (11) und an der Auslaßsektion der Streckmaschine angeordnete Klemmstücköffner (12), die jeweils einen den Dauermagneten 813) abstoßenden Magnetpol (14, 15) aufweisen,
wobei die Klemmhebel (10) durch die magnetische Abstoßungskraft für Schwingung angetrieben werden, um damit das Bandmaterial (8) zu verklemmen oder zu verspannen und freizugeben.

## Revendications

1. Une machine d'étirage horizontale pour pincer les bords marginaux d'une matière en bande (8) en forme de pellicule et pour étirer latéralement en continu la matière en bande (8) dans la direction transversale, comportant
des corps de pince (16) pour pincer et libérer la matière en bande et pour conserver d'eux mêmes leur état résultant, et
des leviers de pince (10) montés de manière basculante sur lesdits corps de pince (16) et à l'extrémité supérieure de chacun desquels est fixé un aimant permanent (13),
caractérisée en ce que
des organes (11) de fermeture des pinces sont disposés dans la section d'entrée et des organes (12) d'ouverture des pinces sont disposés dans la section de sortie de la machine d'étirage, chacun comportant un pôle magnétique (14,15) répulsif par rapport audit aimant permanent (13),
l'oscillation desdits leviers de pince (10) étant provoquée par la force magnétique de répulsion pour ainsi pincer et libérer la matière en bande (8).
